# EUROPEAN PATENT SPECIFICATION

(11) **EP 4 477 441 B1**
(45) Date of publication and mention of the grant of the patent: **04.03.2026**
(21) Application number: 24181307.0
(22) Date of filing: 11.06.2024
(51) Int. Cl.: B60K 13/02, B60K 11/02, B60K 13/06, B60K 11/08

(54) **VEHICLE WITH SIDE DUCTS FOR THE CONFINEMENT OF A CENTRAL HOT FLOW**
FAHRZEUG MIT SEITENKANÄLEN ZUR BEGRENZUNG EINES ZENTRALEN WÄRMEFLUSSES
VÉHICULE AVEC DES CONDUITS LATÉRAUX POUR LE CONFINEMENT D'UN FLUX CHAUD CENTRAL

(30) Priority: 16.06.2023 IT 202300012393
(43) Date of publication of application: 18.12.2024
(73) Proprietor: FERRARI S.p.A., 41100 Modena (IT)
(72) Inventor: PAOLINI, Andrea, 41100 MODENA (IT); CURATOLA, Rubens Mauro, 41100 MODENA (IT); BIANCALANA, Matteo, 41100 MODENA (IT)
(74) Representative: Studio Torta S.p.A.

(56) References cited:
- JP-A- 2005 178 427
- US-A1- 2012 318 476
- US-B2- 10 569 643

## Description

### CROSS-REFERENCE TO RELATED APPLICATIONS

This patent application claims priority from Italian patent application no. 102023000012393 filed on June 16, 2023.

### TECHNICAL FIELD

The invention relates to a vehicle.

The invention particularly advantageously applies to a hybrid vehicle provided with an internal combustion engine and with an electric motor, to which explicit reference will be made in the description below without because of this lacking generality.

### BACKGROUND

In the field of hybrid vehicles, a vehicle is known, which comprises a support frame defining part of a lower floor of the vehicle; a passenger compartment mounted on the support frame and projecting upwards from the lower floor; an outer body; a front compartment obtained within the outer body and delimited by a front bumper and by a front hood; and a rear compartment obtained within the outer body.

The vehicle is further provided with a main internal combustion engine accommodated in the rear compartment, with a compressor to supply compressed air to the main engine, with a heat exchanger to cool the air supplied by the compressor to the main engine and with a pair of intake mouths to supply air coming from the outside to the heat exchanger.

The vehicle further comprises at least one pair of additional intake mouths to connect the outside and the passenger compartment to one another; an air heating/conditioning system to heat/condition the air supplied to the passenger compartment through the additional intake mouths; and an auxiliary electric motor accommodated in the front compartment and associated with a front radiator mounted along a supply duct communicating with the outside.

The vehicle further comprises an aerodynamic bottom, which is fixed to the support frame, defines part of the lower floor and comprises, in turn, a front bottom, which is mounted in the area of the front compartment, a rear bottom, which is mounted in the area of the rear compartment, and a central bottom, which is mounted in the area of the passenger compartment.

Since the vehicle must be subject to a relatively large vertical load, the front bottom must be closed and the supply duct must extend through the front hood starting from the front bumper.

Known vehicles of the type described above suffer from some drawbacks, which are mainly due to the fact that the flow of air heated by the front radiator and supplied along the supply duct and through the front hood causes the heating of the air supplied through the aforesaid intake mouths and jeopardizes the correct operation of the heat exchanger and of the heating/conditioning system.

JP 2005 178427 A discloses a vehicle with a central duct and two side ducts.

### SUMMARY

The object of the invention is to provide a vehicle that is not affected by the aforementioned drawbacks and can be manufactured in a simple and economic fashion.

According to the invention, there is provided a vehicle as claimed in the appended claims.

### BRIEF DESCRIPTION OF THE DRAWINGS

The invention will now be described with reference to the accompanying drawings showing a non-limiting embodiment thereof, wherein:
figures 1 and 2 are two schematic perspective views, with parts removed for greater clarity, of a preferred embodiment of the vehicle according to the invention; and
figure 3 is a schematic perspective view, with parts removed for greater clarity, of a detail of the vehicle of figures 1 and 2.

### DESCRIPTION OF EMBODIMENTS

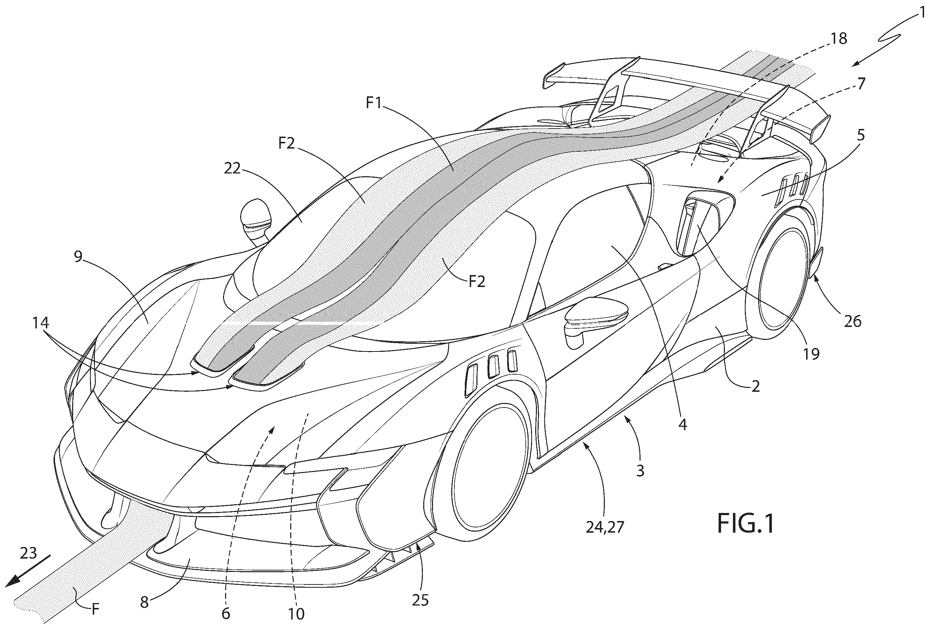

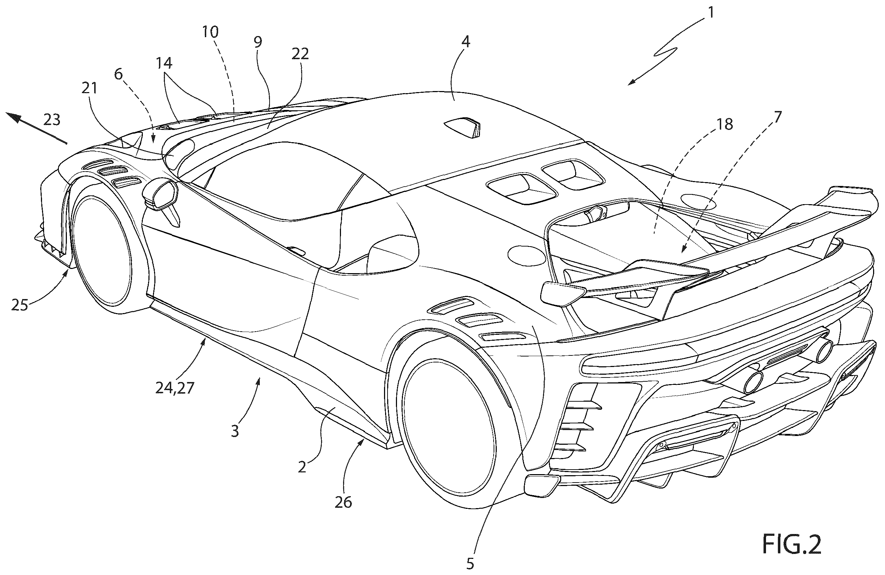

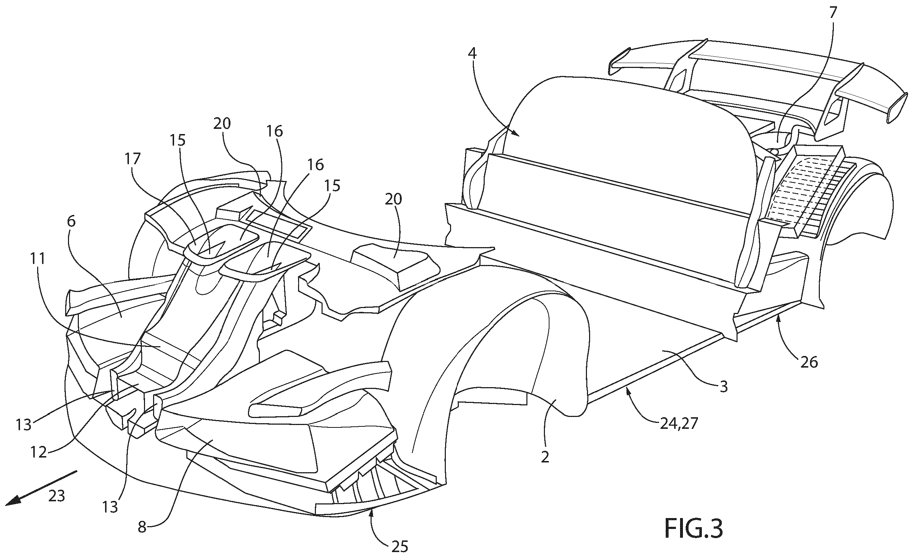

With reference to figures 1, 2 and 3, number 1 indicates, as a whole, a vehicle, specifically a hybrid vehicle, comprising a support frame 2 defining at least part of a lower floor 3 of the vehicle 1, a passenger compartment 4 mounted on the frame 2 and projecting upwards from the floor 3 and an outer body 5.

The vehicle 1 further comprises a front compartment 6 obtained within the body 5 and a rear compartment 7 obtained within the body 5.

The front compartment 6 is delimited by a front bumper 8 and by a front hood 9 and accommodates, on the inside, a first motor 10, specifically an electric motor, and a front radiator 11 to cool the motor 10.

The radiator 11 is arranged along a central duct 12, which extends inside the compartment 6 between the bumper 8 and the hood 9 and opens outwards both through the bumper 8 and through the hood 9.

The compartment 6 also houses, on the inside, two side ducts 13, which are arranged on opposite sides of the duct 12, extend between the bumper 8 and the hood 9, are S-shaped and open outwards both through the bumper 8 and through the hood 9.

The hood 9 has, in this case, two openings 14, each provided with a dividing partition 15 defining two outlet mouths 16, 17, the mouth 16 being an inner mouth communicating with the duct 12 and the mouth 17 being an outer mouth communicating with a duct 13.

In use, the air flow F flowing into the compartment 6 during the normal running of the vehicle 1 is divided into a central air flow F1, which is supplied along the duct 12, through the radiator 11 and to the mouths 16, and into two side air flows F2, which are supplied along the relative ducts 13 and to the relative mouths 17.

When flowing out of the hood 9, the central air flow F1 is laterally delimited by the two side air flows F2, which do not flow through the radiator 11 and, therefore, have a lower temperature than a temperature of the central air flow F1.

The rear compartment 7 houses, on the inside, a second engine 18, specifically an internal combustion engine, a known and not shown turbocharger to supply compressed air to the engine 18 and at least one heat exchanger (not shown), commonly known as "intercooler", to cool the compressed air supplied by the turbocharger (not shown) to the engine 18.

The vehicle 1 is further provided with a pair of intake mouths 19, which are obtained between the passenger compartment 4 and the rear compartment 7 and open outwards through the body 5 in the area of the side flanks of the vehicle 1 to supply air to the heat exchanger (not shown).

The vehicle 1 further comprises a known air heating/conditioning system, which is not shown herein, to supply hot/conditioned air into the passenger compartment 4, a first pair of intake mouths 20 obtained under the hood 9 to supply air into the passenger compartment 4 through the air heating/conditioning system and a second pair of intake mouths 21 obtained along a lower edge of a front windshield 22 to supply air into the passenger compartment 4 through the air heating/conditioning system.

The mouths 19, 20, 21 of each pair of mouths 19, 20, 21 are substantially symmetrical relative to a longitudinal symmetry plane of the vehicle and are arranged so that the distance between the mouths 17, measured crosswise to a forward moving direction 23 of the vehicle 1, is smaller than the distance between the mouths 19, the distance between the mouths 20 and the distance between the mouths 21, which are also measured crosswise to the direction 23.

As a consequence, the air flows F2, namely the air flows at a lower temperature, extend between the mouths 19, 20, 21 and prevent the air flow F1, namely the air flow at a higher temperature, from reaching the mouths 19, 20, 21 and from jeopardizing the correct operation of the radiator 11 and of the aforesaid heat exchanger (not shown).

The vehicle 1 finally comprises an aerodynamic bottom 24, which is fixed to the frame 2, defines part of the floor 3 and comprises, in turn, a front bottom 25, which is mounted in the area of the front compartment 6, a rear bottom 26, which is mounted in the area of the rear compartment 7, and a central bottom 27, which is mounted in the area of the passenger compartment 4.

At least the front bottom 25 is closed so as to exert a relatively high vertical load upon the vehicle 1.

## Claims

1. A vehicle comprising a support frame (2); a passenger compartment (4); an outer body (5); a front compartment (6) obtained within the outer body (5) and delimited by a front bumper (8) and by a front hood (9); a rear compartment (7) obtained within the outer body (5); a central duct (12), which extends between the front bumper (8) and the front hood (9) and opens outwards both through the front bumper (8) and through the front hood (9); and a front radiator (11) mounted in the front compartment (6) and along the central duct (12); it further comprises two side ducts (13), which are arranged on opposite sides of the central duct (12), **characterized in that** the side (13) ducts extend between the front bumper (8) and the front hood (9) and open outwards both through the front bumper (8) and through the front hood (9) so as to confine a central air flow (F1) flowing along the central duct (12) between two side air flows (F2) flowing along the side ducts (13).

2. The vehicle according to claim 1, wherein the two side ducts (13) are arranged on opposite sides of the front radiator (11).

3. The vehicle according to claim 1 or 2, wherein each side duct (13) is substantially S-shaped.

4. The vehicle according to any one of the preceding claims and further comprising at least one pair of first intake mouths (20, 21) to connect the passenger compartment (4) and the outside to one another and to allow environment air to flow into the passenger compartment (4); the first intake mouths (20, 21) of each pair of first intake mouths (20, 21) being obtained on the outside of the side ducts (13) .

5. The vehicle according to claim 4 and further comprising an air heating/conditioning system interposed between the first intake mouths (20, 21) and the passenger compartment (4) in order to heat/condition the air flowing through the first intake mouths (20, 21).

6. The vehicle according to any one of the preceding claims and further comprising a main engine (18), in particular an internal combustion engine, housed in the rear compartment (7), a compressor to supply compressed air to the main engine (18), at least one heat exchanger to cool the air supplied by the compressor to the main engine (18) and at least one pair of second intake mouths (19) obtained between the passenger compartment (4) and the rear compartment (7) in order to connect the heat exchanger and the outside to one another; the second intake mouths (19) of each pair of second intake mouths (19) being obtained on the outside of the side ducts (13).

7. The vehicle according to any one of the preceding claims, wherein the front hood (9) has at least one central opening (16) for the passage of the central air flow (F1) and, for each side duct (13), a respective side opening (17) for the passage of the relative side air flow (F2).

8. The vehicle according to claim 7, when it depends on claim 4 and/or 6, wherein the intake mouths (19, 20, 21) of each pair of intake mouths (19, 20, 21) are substantially symmetrical relative to a longitudinal symmetry plane of the vehicle and are arranged at a distance from one another, measured crosswise to a forward moving direction (23) of the vehicle, that is greater than a distance between the side openings (17), which is also measured crosswise to the forward moving direction (23).

9. The vehicle according to any one of the preceding claims and further comprising an auxiliary motor (10), in particular an electric motor, associated with and cooled by the front radiator (11).

10. The vehicle according to any one of the preceding claims, wherein the central duct (12) and the side ducts (13) extend through the front compartment (6).

## Patentansprüche

1. Fahrzeug, umfassend einen Tragrahmen (2); einen Fahrgastraum (4); eine äußere Karosserie (5); einen vorderen Raum (6), der innerhalb der äußeren Karosserie (5) erhalten wird und durch einen vorderen Stoßfänger (8) und durch eine vordere Motorhaube (9) begrenzt wird; einen hinteren Raum (7), der innerhalb der äußeren Karosserie (5) erhalten wird; einen zentralen Kanal (12), der sich zwischen dem vorderen Stoßfänger (8) und der vorderen Motorhaube (9) erstreckt und sich sowohl durch den vorderen Stoßfänger (8) als auch durch die vordere Motorhaube (9) nach außen öffnet; und einen vorderen Kühler (11), der in dem vorderen Raum (6) und entlang des zentralen Kanals (12) montiert ist;
es ferner zwei Seitenkanäle (13) umfasst, die auf gegenüberliegenden Seiten des zentralen Kanals (12) angeordnet sind,
**dadurch gekennzeichnet, dass** sich die Seitenkanäle (13) zwischen dem vorderen Stoßfänger (8) und der vorderen Motorhaube (9) erstrecken und sich sowohl durch den vorderen Stoßfänger (8) als auch durch die vordere Motorhaube (9) nach außen öffnen, um einen zentralen Luftstrom (F1), der entlang des zentralen Kanals (12) strömt, zwischen zwei seitlichen Lufttrömen (F2), die entlang der Seitenkanäle (13) strömen, einzudämmen.

2. Fahrzeug nach Anspruch 1, wobei die zwei Seitenkanäle (13) auf gegenüberliegenden Seiten des vorderen Kühlers (11) angeordnet sind.

3. Fahrzeug nach Anspruch 1 oder 2, wobei jeder Seitenkanal (13) im Wesentlichen S-förmig ist.

4. Fahrzeug nach einem der vorhergehenden Ansprüche und ferner umfassend mindestens ein Paar erster Einlassmündungen (20, 21), um den Fahrgastraum (4) und die Außenseite miteinander zu verbinden und um zu ermöglichen, dass Umgebungsluft in den Fahrgastraum (4) strömt; wobei die ersten Einlassmündungen (20, 21) jedes Paars erster Einlassmündungen (20, 21) an der Außenseite der Seitenkanäle (13) erhalten sind.

5. Fahrzeug nach Anspruch 4 und ferner umfassend ein Luftheizungs-/Klimatisierungssystem, das zwischen den ersten Einlassmündungen (20, 21) und dem Fahrgastraum (4) angeordnet ist, um die durch die ersten Einlassmündungen (20, 21) strömende Luft zu erwärmen/zu konditionieren.

6. Fahrzeug nach einem der vorhergehenden Ansprüche und ferner umfassend einen Hauptmotor (18), insbesondere einen Verbrennungsmotor, der in dem hinteren Raum (7) untergebracht ist, einen Verdichter, um dem Hauptmotor (18) Druckluft zuzuführen, mindestens einen Wärmetauscher, um die vom Verdichter dem Hauptmotor (18) zugeführte Luft zu kühlen, und mindestens ein Paar zweiter Einlassmündungen (19), die zwischen dem Fahrgastraum (4) und dem hinteren Raum (7) erhalten sind, um den Wärmetauscher und die Außenseite miteinander zu verbinden; wobei die zweiten Einlassmündungen (19) jedes Paars zweiter Einlassmündungen (19) an der Außenseite der Seitenkanäle (13) erhalten sind.

7. Fahrzeug nach einem der vorhergehenden Ansprüche, wobei die Fronthaube (9) mindestens eine zentrale Öffnung (16) für den Durchgang des zentralen Luftstroms (F1) und für jeden Seitenkanal (13) eine jeweilige Seitenöffnung (17) für den Durchgang des entsprechenden Seitenluftstroms (F2) aufweist.

8. Fahrzeug nach Anspruch 7, wenn er von Anspruch 4 und/oder 6 abhängt, wobei die Einlassmündungen (19, 20, 21) jedes Paars von Einlassmündungen (19, 20, 21) im Wesentlichen symmetrisch relativ zu einer Längssymmetrieebene des Fahrzeugs sind und in einem Abstand voneinander angeordnet sind, gemessen quer zu einer Vorwärtsbewegungsrichtung (23) des Fahrzeugs, der größer ist als ein Abstand zwischen den Seitenöffnungen (17), der auch quer zu der Vorwärtsbewegungsrichtung (23) gemessen wird.

9. Fahrzeug nach einem der vorhergehenden Ansprüche und ferner umfassend einen Hilfsmotor (10), insbesondere einen Elektromotor, der mit dem vorderen Kühler (11) assoziiert ist und von diesem gekühlt wird.

10. Fahrzeug nach einem der vorhergehenden Ansprüche, wobei sich der zentrale Kanal (12) und die Seitenkanäle (13) durch den vorderen Raum (6) erstrecken.

## Revendications

1. Véhicule comprenant un cadre de support (2) ; un habitacle (4) ; un corps extérieur (5) ; un compartiment avant (6) obtenu à l'intérieur du corps extérieur (5) et délimité par un pare-chocs avant (8) et par un capot avant (9) ; un compartiment arrière (7) obtenu à l'intérieur du corps extérieur (5) ; un conduit central (12), qui s'étend entre le pare-chocs avant (8) et le capot avant (9) et s'ouvre vers l'extérieur à la fois à travers le pare-chocs avant (8) et à travers le capot avant (9) ; et un radiateur avant (11) monté dans le compartiment avant (6) et le long du conduit central (12) ;
il comprend en outre deux conduits latéraux (13), étant disposés sur les côtés opposés du conduit central (12),
**caractérisé en ce que** les conduits latéraux (13) s'étendent entre le pare-chocs avant (8) et le capot avant (9) et s'ouvrent vers l'extérieur à la fois à travers le pare-chocs avant (8) et à travers le capot avant (9) de manière à confiner un flux d'air central (F1) s'écoulant le long du conduit central (12) entre deux flux d'air latéraux (F2) s'écoulant le long des conduits latéraux (13).

2. Véhicule selon la revendication 1, les deux conduits latéraux (13) étant disposés sur les côtés opposés du radiateur avant (11).

3. Véhicule selon la revendication 1 ou 2, chaque conduit latéral (13) étant sensiblement en forme de S.

4. Véhicule selon l'une quelconque des revendications précédentes, et comprenant en outre au moins une paire de premières bouches d'admission (20, 21) pour relier l'habitacle (4) et l'extérieur l'un à l'autre et pour permettre à l'air ambiant de s'écouler dans l'habitacle (4) ; les premières bouches d'admission (20, 21) de chaque paire de premières bouches d'admission (20, 21) étant obtenues sur l'extérieur des conduits latéraux (13).

5. Véhicule selon la revendication 4 et comprenant en outre un système de chauffage d'air/de climatisation interposé entre les premières bouches d'admission (20, 21) et l'habitacle (4) afin de chauffer/climatiser l'air circulant à travers les premières bouches d'admission (20, 21).

6. Véhicule selon l'une quelconque des revendications précédentes et comprenant en outre un moteur principal (18), en particulier un moteur à combustion interne, logé dans le compartiment arrière (7), un compresseur pour alimenter le moteur principal (18) en air comprimé, au moins un échangeur de chaleur pour refroidir l'air fourni par le compresseur au moteur principal (18) et au moins une paire de secondes bouches d'admission (19) obtenues entre l'habitacle (4) et le compartiment arrière (7) afin de relier l'échangeur de chaleur et l'extérieur l'un à l'autre ; les secondes bouches d'admission (19) de chaque paire de secondes bouches d'admission (19) étant obtenues sur l'extérieur des conduits latéraux (13).

7. Véhicule selon l'une quelconque des revendications précédentes, le capot avant (9) présentant au moins une ouverture centrale (16) pour le passage du flux d'air central (F1) et, pour chaque conduit latéral (13), une ouverture latérale (17) respective pour le passage du flux d'air latéral (F2) relatif.

8. Véhicule selon la revendication 7, lorsqu'elle dépend de la revendication 4 et/ou 6, les bouches d'admission (19, 20, 21) de chaque paire de bouches d'admission (19, 20, 21) étant sensiblement symétriques par rapport à un plan de symétrie longitudinal du véhicule et étant disposées à une distance l'une de l'autre, mesurée transversalement par rapport à une direction de déplacement vers l'avant (23) du véhicule, qui est supérieure à une distance entre les ouvertures latérales (17), étant également mesurée transversalement par rapport à la direction de déplacement vers l'avant (23).

9. Véhicule selon l'une quelconque des revendications précédentes, et comprenant en outre un moteur auxiliaire (10), notamment électrique, associé au radiateur avant (11) et refroidi par ce dernier.

10. Véhicule selon l'une quelconque des revendications précédentes, le conduit central (12) et les conduits latéraux (13) s'étendant à travers le compartiment avant (6).
